# EUROPEAN PATENT APPLICATION

(11) **EP 3 249 854 A1**
(43) Date of publication of application: **29.11.2017**
(21) Application number: 16305596.5
(22) Date of filing: 24.05.2016
(51) Int. Cl.: H04L 12/26, H04W 24/08, H04W 76/02

(54) **METHOD, DEVICE AND SYSTEM FOR GENERATING EVENTS ASSOCIATED WITH WIRELESS DEVICES**

(71) Applicant: Thomson Licensing, 92130 Issy-les-Moulineaux (FR)
(72) Inventor: JEANNE, Ludovic, 35576 Cesson-Sévigné Cedex (FR); MINARD, Philippe, 35576 Cesson-Sévigné Cedex (FR); NADEAU, Pascal, 35576 Cesson-Sévigné Cedex (FR)
(74) Representative: Huchet, Anne

(57) **Abstract**

A method for storing information corresponding to packets received from wireless devices in wireless access points is disclosed. This information is available for applications to generate events corresponding to wireless devices based on the stored information. Applications or users may also query this information for extracting knowledge about those wireless devices usage.

## Description

### 1. TECHNICAL FIELD

The technical field of the disclosed method, device and system is related to wireless networks, wireless access points and knowledge discovery.

### 2. BACKGROUND ART

Wireless access points are very popular for example to deliver Internet access in home environments or as hot spots in public spaces. Wireless access points generally collect and maintain a set of statistics for the purpose of their own operation. For example they maintain a list of currently connected wireless devices. This list is typically accessible from an interface of the access point. There are also known techniques for an access point to measure the received power level of other access points as well as of wireless devices currently connected. These power measurements are generally used for the operation of the wireless network itself: measures of the power level of neighboring access points are useful in order for an access point to select a good wireless channel with as few detected neighboring access points as possible. There are also known techniques for measuring the power level of connected wireless devices in an access point in order to control the power level of the access point. For example, when transmitting a data packet to a wireless device, it is advantageous to adjust the transmit power level depending on the power level measured at the reception of data packets from that wireless device. Such techniques allow both to reduce the energy consumption and the level of interferences.

However, although access points maintain some data for the purpose of the operation of the wireless network, there are no known methods for extracting knowledge from such data so as to provide new services. Some new methods are needed to collect and store some operational wireless network data in order to extract knowledge from these data applicable to new services for home users.

### 3. SUMMARY

A salient idea is to store information corresponding to packets received from wireless devices in wireless access points. This information is then available for applications to generate events corresponding to wireless devices based on this information. Applications or users may also query this information for extracting knowledge about those wireless devices usage.

To that end a method for generating events associated with a wireless device is disclosed. The method comprises:
- Receiving a packet from the wireless device;
- Storing, in an history, a reception time of the packet and a MAC address identifying the wireless device having sent the packet;
- Generating at least one event associated with the wireless device, based on the history.

According to a particularly advantageous variant, the packet is an IEEE 820.11 packet.

According to another particularly advantageous variant, the packet at least belongs to:
- A probe request packet,
- An authentication open packet,
- An association request packet.

According to another particularly advantageous variant, the method further comprises automatically selecting a reference power level among a set of values, the selection being based on a number of neighboring access points detected in the range of the access point.

According to another particularly advantageous variant, the method further comprises ignoring the packet reception in case a received power level of the packet is below the reference value.

According to another particularly advantageous variant, a device arrival event is generated in case after the packet reception corresponding to the MAC address, no packet corresponding to the MAC address was received before the reception time of the packet over a period greater than a non-null first value.

According to another particularly advantageous variant, a device presence event is further generated in case a plurality of packets corresponding to the MAC address is received after the packet reception with a cumulated duration above a second value and wherein the difference between any two successive packet reception times is below the first value.

According to another particularly advantageous variant, wherein a device departure event is generated in case after the packet reception corresponding to the MAC address, no packet corresponding to the MAC address is received in a period starting from the reception time of the packet, and greater than a non-null third value.

According to another particularly advantageous variant, wherein the method further comprises labelling the wireless device, wherein a label corresponding to the MAC address is allocated from a user interface.

According to another particularly advantageous variant, wherein the method further comprises generating at least one labelled event, wherein the at least one labelled event at least belongs to the device arrival, the device departure, and the device presence events, and corresponds to a labelled wireless device.

According to another particularly advantageous variant, wherein the method further comprises generating labelled data, wherein labelled data is obtained by querying the history of the access point, with a label, and a time period.

According to another particularly advantageous variant, wherein the method further comprises a plurality of access points belonging to a same delivery system as the access point, wherein the access point receives from an access point of the plurality of access points data information about reception time of packets received by the access point of the plurality of access points.

In a second aspect, an access point device configured for generating events associated with a wireless device is also disclosed. It comprises:
- Means for receiving a packet from the wireless device;
- Means for storing, in an history, a reception time of the packet and a MAC address identifying the wireless device having sent the packet;
- Means for generating at least one event associated with the wireless device, based on the history.

In a third aspect, a computer program for generating events associated with a wireless device is also disclosed. The computer program comprises program code instructions executable by a processor for:
- receiving a packet from the wireless device;
- storing, in an history, a reception time of the packet and a MAC address identifying the wireless device having sent the packet;
- generating at least one event associated with the wireless device, based on the history.

In a fourth aspect, a computer program product for generating events associated with a wireless device is also disclosed. The computer program product comprises instructions of program code executable by at least one processor for:
- receiving a packet from the wireless device;
- storing, in an history, a reception time of the packet and a MAC address identifying the wireless device having sent the packet;
- generating at least one event associated with the wireless device, based on the history.

While not explicitly described, the present embodiments may be employed in any combination or sub-combination. For example, the present principles are not limited to the described variants, and any arrangement of variants and embodiments can be used. Moreover the present principles are not limited to the described event examples. The present principles are not further limited to the described applications / scenario and are applicable to any application extracting knowledge from packets reception over time in an access point. The present principles are not further limited to the described wireless technologies.

Besides, any characteristic, variant or embodiment described for the method is compatible with an access point device intended to process the disclosed method and with a computer-readable storage medium storing program instructions.

### 4. BRIEF DESCRIPTION OF THE DRAWINGS

In the drawings, an embodiment of the present disclosure is illustrated. It shows:
- **Figure 1** illustrates the method for generating events associated with a wireless device according to a specific and non-limitative embodiment;
- **Figure 2** depicts an example of a timeline of packets reception and event generation according to a specific and non-limitative embodiment;
- **Figure 3** represents a processing device for generating events associated with a wireless device according to a specific and non-limitative embodiment;
- **Figure 4** represents an exemplary architecture of the processing device of figure 3 according to a specific and non-limitative embodiment;

### 5. DESCRIPTION OF EMBODIMENTS

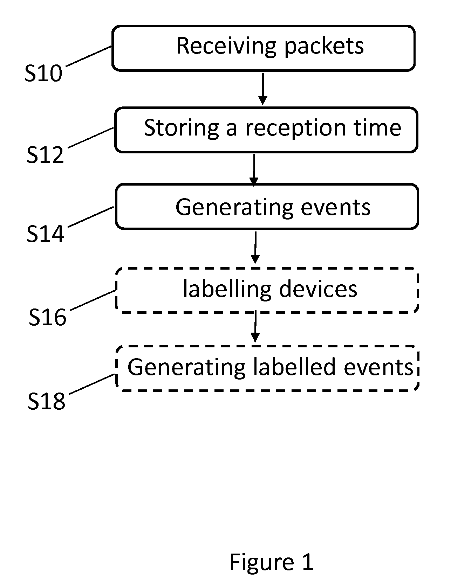

**Figure 1** illustrates the method 3 for generating events associated with a wireless device. For the sake of clarity and without limitation, the method is described as implemented in an access point. But any other implementation for example in a gateway or a smartphone or any kind of network device comprising the functionality of an access point is compatible with the disclosed principles.

In the step S10, packets are received by an access point from at least one wireless device. Packets are for example IEEE 802.11 packets in any of its variant (IEEE 802.11 a, b, g, h, n, ...). In another example packets are Bluetooth packets, or any kind of wireless packets. In a first variant, packets are received in the step S10 from wireless devices being associated with the access point. In other words, a preliminary wireless association took place between the wireless device and the access point, and from the perspective of the access point, the wireless device belongs to its associated (or connected) wireless devices. Packets received by the access point from that wireless device in this variant are any packets sent by an associated / connected wireless device. In an advantageous variant, the wireless device is not yet associated with the access point, and packets received by the access point belong to management packets that are exchanged between a wireless device and an access point as part of a wireless association protocol. For example, and considering the IEEE 802.11 standard such packets comprise a probe request packet, an authentication open packet, an association request packets. Taking data packets into account from not yet associated devices, is advantageous as it allows to capture data packets from anonymous devices being at the neighborhood of the access point without having been explicitly declared to the access point. Indeed, in most operating access points the security is activated and prevents such anonymous devices, not owning any credentials to connect to the access point.

In the step S12, a reception time for a packet reception is stored in a history in the access point together with an identifier, identifying the wireless device having sent the packet. The identifier is for example a MAC (Medium Access Control) address of the wireless device. A clock is for example running in the access point, and at a packet reception, the current time is extracted from the running clock. The accuracy of the reception time does not need to be very high, and is for example in the range of a second, or a one-tenth of a second. In a variant the received power level, for example the signal to noise ratio, of the received packet is also stored in the history together with the reception time and the MAC address of the wireless device. Storing the power level in the history is advantageous as the power level comprises some information relating to the distance of the wireless device to the access point while sending the packet to the access point. In another variant, instead of storing the received power level in the history, only a range of power level is stored together with the reception time. Considering for example three intervals of power level: above minus sixty dBm, between minus sixty dBm and minus eight dBm, below minus eighty dBm. Only a value (one, two, or three) needs to be stored together with the reception time for indicating to which interval of power level the received packet belongs. This enabled a more compact storage of the information in the history.

The access point may be operating in different wireless environments: the access point may for example be relatively isolated, when operating in the country side, with very few other access points in the neighborhood. In such situations the interference level is very low and every packet reception event is a useful event to process. But the access point may alternatively be operating in a crowded environment, as for example dense urban areas where the level of interference is generally very high representing a kind of noise. In presence of a high level of interferences, it is advantageous to filter the information based on the received power level, so as to filter noisy data. For example, considering three types of density, any packet reception at a power level below minus sixty dBm is ignored in dense urban areas, for the purpose of the disclosed principles. In medium areas (not dense areas but not completely isolated areas), any packet reception at a power level below minus eighty dBm is also ignored for the purpose of the disclosed principles. In isolated areas every received packet is taken into account (not ignored) for the purpose of the disclosed principles. Other variations with less (i.e. only two) or more types of densities is also compatible with the disclosed principles.

In a first variant the type of density is configured in the access point by external means, for example manually entered by a user via a user interface, or remotely configured by a network operator as part of a service provisioning process. In a second advantageous variant, the type of density is automatically determined by the access point based on the number of access points detected in the neighborhood. Indeed, while scanning for selecting an appropriate frequency channel for operating, the access point is able to listen to other frequency channels and to detect other access points operating in a close neighborhood. When a small number of access points, for example five, are detected in the range of the access point, it is considered to be in an isolated area. When a medium number of access points, for example between five and ten, are detected in the range of the access point, it is considered to be in a medium area. When a large number of access points are detected in the range of the access points, for example above ten, it is considered to be in a crowded area. In a variant, and in addition to the number of access points, a minimum received power level is taken into account for considering a detected access point as participating in the ambient noise. A minimum power level of for example minus eighty dBm has to be detected for considering the access point in the determination of the type of density. Obviously, the skilled in the art may considerer other values as the minimum power level. To be considered as an isolated area there shall be less than five access points detected in the range, above the minimum power level, and similarly for the other types of densities.

In any of the variant described above for determining a type of density, a reference power level is selected among a set of values, based on a determined type of density, for example, based on a number of neighboring access points detected in the range of the access point. A packet received at a power level below the reference power level is ignored, and considered as a noisy information. In a first embodiment, such received packet with a power level below the reference power level is simply not stored in the history. In a second embodiment, such received packet is stored in the history, with an indicator it is below the reference power level, and will be ignored in a later step for generating events. Storing information about such received packets, with a received power level below the reference power level, even without taking them into account for generating events, is advantageous as the corresponding information is available for further querying the history, as it will be described later, so as to determine for example whether a particular device has been around a particular access point at a particular point in time.

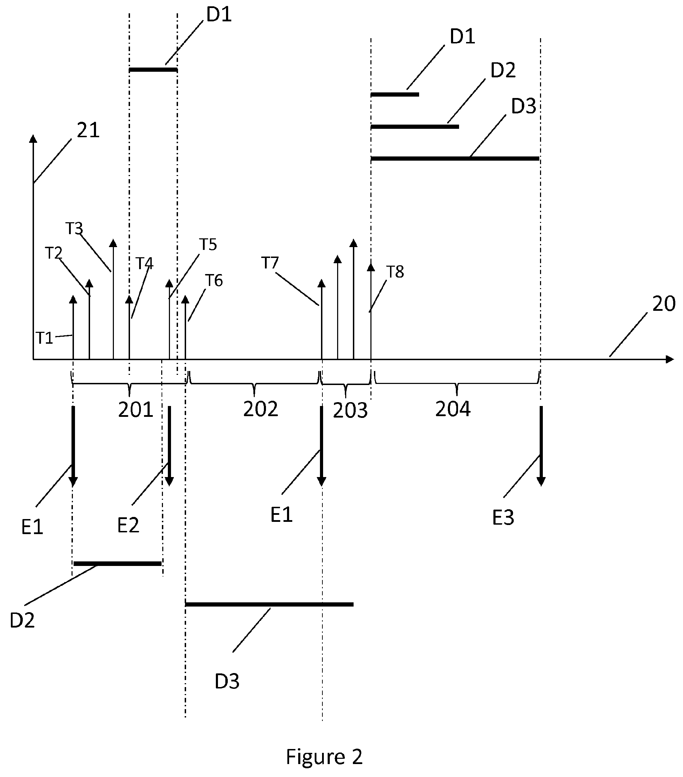

In the step S14 events are generated based on the history. Various types of events will be described referring to Figure 2, representing a time line as an x-axis 20, and power levels of received packets as a y-axis 21. For the sake of clarity only packets corresponding to a single MAC address are represented on the figure 2.

At least three types of events are generated: a device arrival event E1, a device presence event E2 and a device departure event E3. A device arrival event E1 is generated in case after a packet reception at time T1, T7, corresponding to a MAC address, no packet corresponding to the same MAC address was received before the reception time T1, T7 of the packet over a period greater than a non-null first value D1. A device arrival event E1 indicates a new device is detected by the access point. This new device may be a device that has never been detected by the access point until that point, or a device that has already been detected but that has been silent or away for a given period of time. Such events are useful to report as they indicate arrivals of devices in the vicinity of the access point. Back to figure 2, the duration of the period between the two successive packet reception times T4 and T5 is smaller than the first value D1, so that no device arrival event E1 is generated for the packet reception at time T5. On the contrary the duration of the period between the two successive packet reception times T6 and T7 is greater than the first value D1, so that a device arrival event E1 is generated corresponding to a packet reception at time T7.

A device presence event E2 is generated in case a plurality of packets corresponding to a same MAC address is received with a cumulated duration above a second value D2 and wherein the difference between any two successive packet reception times T1, T2, T3, T4, T5, T6 is below the first value D1. A device presence event E2 indicates a device has been detected by the access point over a given period of time. Such events are useful as they report that a device has been around the access point for at least a given period of time. Advantageously, this period of time is configurable on the access point by a user or a service provider. Back to figure 2, the cumulated duration of the period between the packet reception times T1, T2, T3, T4, T5, T6 is above the second value D2 and any two successive packet reception times T1, T2, T3, T4, T5, T6 is below the first value D1, so that an event E2 corresponding to the packet reception time T6 is generated. A device presence duration 201, 203 is defined as the cumulated duration corresponding to the reception a successive packets wherein the difference between any two successive packet reception times T1, T2, T3, T4, T5, T6 is below the first value D1. Such device presence durations can be determined based on the history, and retrieved for various purposes as described later. Back to figure 2, the duration 203 between the packet reception time T7 and T8 is below the second value and no device presence event is generated for these successive packet receptions.

A device departure event E3 is generated in case after a packet reception time T8 corresponding to a MAC Address, no packet corresponding to that MAC address is received in a period 204 starting from the reception time T8 of the packet, and greater than a non-null third value D3. A device departure event E3 indicates a device has left the vicinity of the access point. Such events are useful to report that a device has been away from a given point in time. The duration 202 between the packet reception time T7 and the packet reception time T6 being below the third value D3, no device departure event is generated for that period 203 of no packet reception. Advantageously, the durations D1, D2 and/or D3 are configurable on the access point by a user or a service provider.

In a particular embodiment, a packet received with a power level below the reference power level in any of the variants described above, being stored in the history, is further ignored while generating an event in the step S14 in any of the variants. As described earlier storing this information, even without taking it into account for generating an event is advantageous as the corresponding information is available for further exploitation. For example a tracking application, focusing on a particular device, with the support of an operator, operating a set of access points at various locations (such as customer homes), would be able to track that device among the set of operated access points. Indeed, querying the history of access points among the set of access points for received packets even below the reference power level allows to provide a more accurate information about a trajectory of a device over time.

In a specific and non-limiting embodiment, each packet reception for a given MAC address is a trigger for evaluating whether one of the event (device arrival, device presence or device departure) needs to be generated. For a device arrival or a device presence event, the previous period of time is evaluated so as to determine whether another packet has been received in a period shorter than the first value D1, and over which duration. For a device departure event a timer is started from the packet reception time and with a duration corresponding to the third value D3. On the timeout, and after a check on the history that no packet was received corresponding to the same MAC address, a device departure event is generated.

In another specific and non-limiting embodiment, the history is processed on a regular basis, for example every second, or every five seconds and events are generated based on a processing of various packet reception times as explained above. Other implementation strategies for computing the various periods of times are possible and compatible with the disclosed principles.

In the optional step S16, wireless devices are labelled via a user interface, wherein a label corresponds to a MAC address and is selected by a user. A list of usually connected devices, being maintained by the access point, is for example made available to a user via a user interface, together with the periods where these devices have been observed as connected. From that list a user is able to recognize his devices and allocates some labels to them. Advantageously, the access point also displays a list of not associated devices that have been detected together with the corresponding periods of time. A user knowing that a device has a particular pattern is also able to recognize that device. For example in the context of an elderly care situation, an elderly person owning an access point in his home is regularly visited by a care taker carrying a WiFi enabled smartphone. Even if the caretaker smartphone is not declared to the elderly person access point, the access point is able to detect packets from the association protocol, and by applying the above described principles, based on the history, displays the periods of time where that particular device has been detected. A user from the elderly person family by consulting the history of the access point is able to label the care taker smartphone by checking the arrival and departure times.

In the optional step S18 at least one labelled event is generated wherein the at least one labelled event is among a device arrival (E1), a device departure (E3), and a device presence (E2) event, and corresponds to a labelled wireless device. Such labelled events are for example available on the access point itself and can be consulted by a user via the access point user interface. In another example, the access point comprises a configurable interface wherein phone numbers are declared to the access point, and the user is able to configure the access point so that labelled events are generated as SMS towards one of the declared phone number. In another example the configurable interface of the access point enables a user to declare email addresses towards the access point, so that labelled events are generated as emails towards one of the declared email addresses. In a first variant a single phone number or email address is used for all the events. In another example, a phone number / email address is declared per labelled device, and only events corresponding to that labelled device are sent towards that phone number / email address. Any kind of messaging system running on any platform (as for instance FaceBook or WhatsApp) is compatible with the disclosed principles.

In a specific and non-limiting embodiment, labelled data is obtained from the access point by querying the history of the access point, wherein the query comprises a device label and a time period. The query returns labelled data comprising the periods of presence of the corresponding labelled device over the queried period. In another example a query comprising a time period and no particular device returns labelled data comprising the periods of presence of the various devices (labelled or unlabeled devices) that have been detected as present over the queried period. Such queries are useful in a couple of scenario: as described earlier, in case a care taker is regularly visiting an elderly person owning an access point comprising the disclosed principles, a family member is able to check on the access point whether the care taker visited the elderly person, when she arrived, when she left, how long time she spent at the elderly person house. In another example, a house is visited by an intruder who steals pieces of equipment. If the house is equipped with an access point comprising the disclosed principles, querying the history is a way to obtain information on the intruder, in case he was carrying a smartphone. The labelled data will provide information on the MAC address of the intruder smartphone as well as information on the time period of which the intrusion took place. More generally raw data (not necessarily labelled data) are also obtained from the access point by querying the history of the access point, wherein the query comprises a device identifier, such as a MAC Address and a time period. In a particular embodiment, the query in any of its variant comprises an indicator indicating whether the whole history is to be parsed or not (i.e. all the received packets including those with a received power level below the reference power level, or only the received packets with a received power level above the reference power level). Querying the history based on a device identifier enables for example tracking applications (performing the queries) to collect information about a particular device among a set of access points, so as to determine for example a device trajectory (a set of locations at different points in time). Querying whole histories comprising also the information corresponding to received packets with a power level below the reference power level is advantageous as the obtained trajectory comprises more points (location, time) and is more accurate.

Advantageously, in case more than a single access point is deployed in a house, they cooperate so that any packet received by one of them is for example stored in a common history. Many variants are possible for implementing this common history. One access point may for example centralize the history of every packet received by other access points connected to a same delivery system. In another example each access point keeps track of its own history and provides an access to its history to other access points connected to a same delivery system. More generally, in case a plurality of access points belong to a same delivery system as the access point comprising the disclosed principle, the access point receives from at least one of the other access points connected to the same delivery system, data information about reception times of packets received by the at least one access point according to any variant described above.

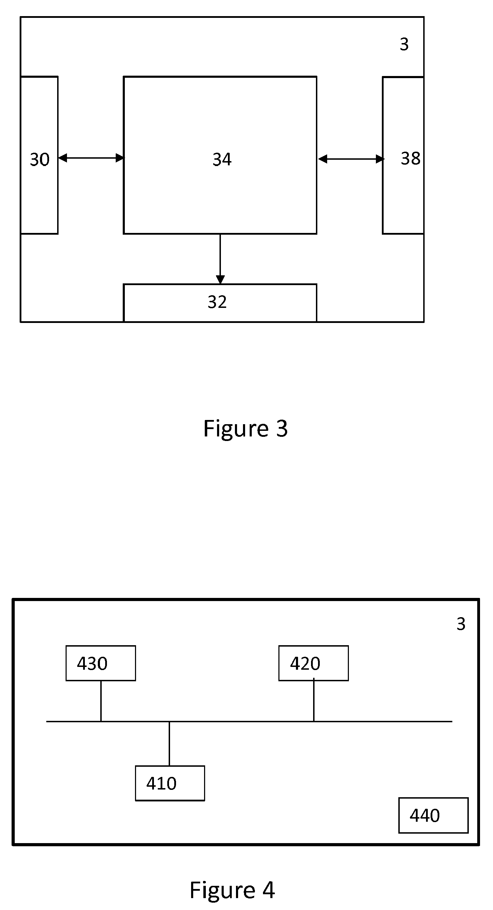

**Figure 3** depicts a processing device 3 for generating events associated with a wireless device.

According to a specific and non-limiting embodiment, the processing device 3 comprises a first wireless network interface 30 configured to send and receive packets to/from at least one wireless devices. According to different embodiments of the disclosed principles, the wireless network interface belongs to a set comprising:
- IEEE 802.11 comprising any variation of the IEEE 802.11 standard;
- Bluetooth in any of its variant.
More generally any network interface allowing to send and receive packets to/from a wireless device, is compatible with this principle.

According to a specific and non-limiting embodiment, the processing device 3 further comprises at least one second network interface 38 configured to send and receive packets towards other devices. According to different embodiments of the disclosed principles, the second network interface belongs to a set comprising:
- A wired local area network interface such as for example Ethernet, MoCA or a power line interface;
- A bus interface as for example USB in any of its variant;
- A broadband network interface, comprising a wide area network interface such as xDSL, HFC, FTTx, WiMAX
- A wireless network interface in any of the variant mentioned above.
The processing device may for example comprise two network interfaces 38, one being a wired LAN interface and one being a WAN interface, such as home gateways providing internet access at home. More generally any network interface allowing to send and receive packets towards other devices, is compatible with this principle.

The first and at least one second network interfaces 30 and 38 are linked to a processing module 34 configured to generate events associated with a wireless device. The processing module 34 is configured to receive packets from the wireless device via the first network interface 30, store in a history a reception time of the packet and a MAC address identifying the wireless device having sent the packet. The processing device is further configured to generate at least one event associated the wireless device based on the history. The generated event is for example transmitted as a data packet towards either the first or the at least one second interface 30, 38, for being received and displayed on another device. In another example the generated event is sent to an output 32 such as for example a display means. According to a particular embodiment, the display means is external to the device and the output 38 sends the generated event to an external display means. According to different embodiments of the principle, the display means, internal or external, belongs to a set comprising:
- a personal computer screen;
- a TV screen;
- a tablet;
- a smartphone screen.
More generally any display means allowing to display at least one event associated with a wireless device, and any network interface allowing to send the at least one event, are compatible with this principle.

**Figure 4** represents an exemplary architecture of the processing device 3 according to a specific and non-limiting embodiment, where the processing device 3 is configured to generate events associated with a wireless device. The processing device 3 comprises one or more processor(s) 410, which is(are), for example, a CPU, a GPU and/or a DSP (English acronym of Digital Signal Processor), along with internal memory 420 (e.g. RAM, ROM, EPROM). The processing device 3 comprises one or several Input/Output interface(s) 430 adapted to send to display output information and/or to allow a user to enter commands and/or data (e.g. a keyboard, a mouse, a touchpad, a webcam, a display), and/or to send / receive data over a network interface; and a power source 440 which may be external to the processing device 3.

According to an exemplary and non-limiting embodiment, the processing device 3 further comprises a computer program stored in the memory 420. The computer program comprises instructions which, when executed by the processing device 3, in particular by the processor 410, make the processing device 3 carry out the processing method described with reference to figure 1. According to a variant, the computer program is stored externally to the processing device 3 on a non-transitory digital data support, e.g. on an external storage medium such as a SD Card, HDD, CD-ROM, DVD, a read-only and/or DVD drive and/or a DVD Read/Write drive, all known in the art. The processing device 3 thus comprises an interface to read the computer program. Further, the processing device 3 could access one or more Universal Serial Bus (USB)-type storage devices (e.g., "memory sticks.") through corresponding USB ports (not shown). According to exemplary and non-limiting embodiments, the processing device 3 is a device, which belongs to a set comprising:
- an access point device;
- a Internet gateway device;
- a set top box device;
- a smartphone;
- a digital media player device;
- a TV device;
- a mobile device ;
- a game device ;
- a tablet (or tablet computer) ;
- a laptop;
- a communication device.

## Claims

1. A method in an access point for generating events associated with a wireless device, said method comprising:
- Receiving (S10) a packet from said wireless device;
- Storing (S12), in an history, a reception time of said packet and a MAC address identifying said wireless device having sent said packet;
- Generating (S14) at least one event (E1, E2, E3) associated with said wireless device, based on said history.

2. The method according to claim 1, wherein said packet is an IEEE 820.11 packet.

3. The method according to claim 2, wherein said packet at least belongs to:
- A probe request packet,
- An authentication open packet,
- An association request packet.

4. The method according to any of claims 1 to 3, further comprising automatically selecting a reference power level among a set of values, said selecting being based on a number of neighboring access points detected in the range of said access point.

5. The method according to claim 4, further comprising ignoring said packet reception in case a received power level of said packet is below said reference value.

6. The method according to any of claims 1 to 5, wherein a device arrival event (E1) is generated in case after said packet reception corresponding to said MAC address, no packet corresponding to said MAC address was received before the reception time of said packet over a period greater than a non-null first value (D1).

7. The method according to claim 6, wherein a device presence event (E2) is further generated in case a plurality of packets corresponding to said MAC address is received after said packet reception with a cumulated duration above a second value (D2) and wherein the difference between any two successive packet reception times is below said first value (D1).

8. The method according to claim 7, wherein a device departure event (E3) is generated in case after said packet reception corresponding to said MAC address, no packet corresponding to said MAC address is received in a period starting from the reception time of said packet, and greater than a non-null third value (D3).

9. The method according to claim 8, further comprising labelling (S16) said wireless device, wherein a label corresponding to said MAC address is allocated from a user interface.

10. The method according to claim 9, further comprising generating (S18) at least one labelled event, wherein said at least one labelled event at least belongs to said device arrival (E1), said device departure (E3), and said device presence (E2) events, and corresponds to a labelled wireless device.

11. The method according to any of claims 9 or 10, further comprising generating labelled data, wherein labelled data is obtained by querying said history of said access point, with a label, and a time period.

12. The method according to any of claims 1 to 11, further comprising a plurality of access points belonging to a same delivery system as said access point, wherein said access point receives from an access point of said plurality of access points data information about reception time of packets received by said access point of said plurality of access points.

13. An access point configured for generating events associated with a wireless device, said access point comprising:
- Means for receiving a packet from said wireless device;
- Means for storing, in an history, a reception time of said packet and a MAC address identifying said wireless device having sent said packet;
- Means for generating at least one event (E1, E2, E3) associated with said wireless device, based on said history.

14. A computer program for generating events associated with a wireless device, said computer program comprising program code instructions executable by a processor for:
- Receiving (S10) a packet from said wireless device;
- Storing (S12), in an history, a reception time of said packet and a MAC address identifying said wireless device having sent said packet;
- Generating (S14) at least one event (E1, E2, E3) associated with said wireless device, based on said history.

15. A computer program product for generating events associated with a wireless device, said computer program product comprising instructions of program code executable by at least one processor for:
- Receiving (S10) a packet from said wireless device;
- Storing (S12), in an history, a reception time of said packet and a MAC address identifying said wireless device having sent said packet;
- Generating (S14) at least one event (E1, E2, E3) associated with said wireless device, based on said history.
